# EUROPÄISCHE PATENTSCHRIFT

(11) **EP 2 785 594 B1**
(45) Veröffentlichungstag und Bekanntmachung des Hinweises auf die Patenterteilung: **10.08.2016**
(21) Anmeldenummer: 12806341.9
(22) Anmeldetag: 27.11.2012
(51) Int. Cl.: B65B 1/22, B65B 1/28, B65B 1/32, B65B 39/10, B65B 43/50, G01G 13/24, G01G 19/14, B65B 57/14, B65G 47/18

(54) **PACKMASCHINE UND VERFAHREN ZUM FÜLLEN VON SÄCKEN**
PACKAGING MACHINE AND METHOD FOR FILLING POUCHES
MACHINE D'EMBALLAGE ET PROCÉDÉ DE REMPLISSAGE DE SACS

(30) Priorität: 28.11.2011 DE 102011119451
(43) Veröffentlichungstag der Anmeldung: 08.10.2014
(73) Patentinhaber: Haver & Boecker oHG, 59302 Oelde (DE)
(72) Erfinder: VOLLENKEMPER, Willi, 59302 Oelde (DE)
(74) Vertreter: BSB Intellectual Property Law
(86) Internationale Anmeldenummer: PCT/EP2012/004883
(87) Internationale Veröffentlichungsnummer: WO 2013/079186

(56) Entgegenhaltungen:
- WO-A1-2007/101836
- WO-A2-2005/110849
- DE-A1-102008 043 545
- FR-A1- 2 456 344

## Beschreibung

Die vorliegende Erfindung betrifft eine Packmaschine und ein Verfahren zum Füllen von Säcken. Die erfindungsgemäße Packmaschine kann zur Abfüllung von Schüttgütern aller Art vorgesehen sein. Besonders bevorzugt wird eine solche Anlage aber zur Abfüllung von Feinprodukten eingesetzt, also zur Abfüllung von feinen und staubenden Produkten, die eine entsprechend lange Füll- und insbesondere Verdichtungszeit benötigen.

Im Stand der Technik sind verschiedenste Packmaschinen zum Füllen von offenen Säcken bekannt geworden. Beispielsweise werden oftmals sogenannte FFS-Packmaschinen ("Form-Fill-Seal-Packmaschinen") eingesetzt, um effektiv Schüttgut in offene Säcke abzufüllen. Bei solchen FFS-Packanlagen wird der offene Sack innerhalb der Maschine oder in einer direkt vorgelagerten Einrichtung gefertigt. Der Maschine wird eine Folienschlauchrolle zugeordnet, aus der während des Betriebes fortlaufend die benötigten offenen Säcke hergestellt werden. Ein erheblicher Vorteil einer solchen FFS-Packmaschine besteht darin, dass die offenen Säcke in ihrer tatsächlich benötigten Länge hergestellt werden können. Es muss nicht auf vorkonfektionierte Säcke zurückgegriffen werden, die zudem teurer sind.

FFS-Packmaschinen verarbeiten offene Säcke aus Kunststofffolie, die wasserdicht ausgeführt sein können. Deshalb können mit feuchtigkeitsempfindlichen Materialien - wie beispielsweise Zement - gefüllte offene Säcke nach dem Verschließen auch im Freien gelagert werden, da der Inhalt zuverlässig vor Feuchtigkeit geschützt aufgenommen ist.

Nachteilig bei bekannten Packmaschinen zum Füllen von offenen Säcken ist die begrenzte Abfüllleistung, insbesondere, wenn staubende Feinprodukte abgefüllt werden sollen, da diese Produkte in der Regel verdichtet werden müssen, um ein stabiles Gebinde zur Verfügung zu stellen, in welchem möglichst wenig Luft enthalten ist. Enthaltene Luft verringert außerdem die Stapelfähigkeit.

Getaktet betriebene rotierbare Packmaschinen können grundsätzlich eine höhere Abfüllleistung ermöglichen, da z. B. an einer Position eine Abfüllung im Grobstrom bis zu z. B. 90 % der abzufüllenden Menge erfolgt, während an der nächsten Winkelposition die Restabfüllung im Feinstrom durchgeführt wird. An der darauf folgenden Winkelposition kann das Produkt im Sack weiter verdichtet und entgast werden. Im nächsten Schritt erfolgt die Abnahme, bevor danach ein neuer offener Sack angehangen wird.

Wird bei einer Packmaschine die Abwiegung im Bruttoverfahren durchgeführt, so muss der an dem Füllstutzen hängende Sack während des Füllvorgangs kontinuierlich gewogen werden. Der Füllvorgang wird beendet, wenn das Zielgewicht erreicht wird. Nachteilig daran ist, dass Rütteleinrichtungen zur Verdichtung des abzufüllenden Produkts nicht nur auf den Sack einwirken, sondern dass die Vibrationen direkt auch auf die Waage übertragen werden, sodass das Wägeergebnis verfälscht werden kann. Deshalb wird die Rütteleinrichtung während des Abfüllens abgeschaltet. Durch das serielle Abwiegen und Rütteln wird jedoch nur eine geringere Abfüllleistung erreicht.

Mit der WO 2005/110849 A2 sind eine Vorrichtung und ein Verfahren für das Befüllen von offenen Säcken mit einem pulverförmigen Produkt bekannt geworden, wobei eine Nettowaage oberhalb einer Rohr- und/oder Trichteranordnung angeordnet ist, die in einen Stutzen mündet, an den ein offener Sack anhängbar ist. Der Nettowaage wird über einen vorgeschalteten Produktförderer Produkt zugeführt, bis die abzufüllende Portion von z. B. 25 kg erreicht ist. Anschließend wird die bereits abgewogene Portion durch die Rohr/Trichteranordnung in den offenen Sack geleitet. In einem Ausführungsbeispiel wird eine zusätzliche Zellenradschleuse der Rohr/Trichteranordnung eingesetzt, mit welcher der Volumenstrom durch die RohrlTrichteranordnung aktiv geregelt wird, damit es während des Füllvorgangs zu keiner Überfüllung kommen kann. Die bekannte Vorrichtung erlaubt auch bei offenen Säcken aus einer Kunststofffolie eine zuverlässige Abfüllung, wobei ein Überfüllen vermieden wird. Nachteilig ist aber, dass der apparative Aufwand groß ist, da ein genau dosierbares Förderorgan zur Befüllung der Nettowaage und eine regelbare Zellenradschleuse in der Rohr/Trichteranordnung benötigt werden.

Eine weitere Möglichkeit ist die Abfüllung über eine Differentialwaage. Ein solches System ist z. B. Mit der DE 10 2008 043 545 A1 bekannt geworden. Dort werden an einem Absackkarussell zur Erhöhung der Abfüllleistung zwei Differentialwaagen für den Grobstrom und eine Differentialwaage für den Feinstrom eingesetzt. Die Abfüllleistung ist aber trotz der eingesetzten drei Differentialwaagen relativ gering. Ein weiterer Nachteil dieses Systems ist, dass sich im ungünstigsten Fall die Ungenauigkeiten aller drei eingesetzten Differentialwaagen addieren können, sodass die Gewährleistung genauer Gewichte schwierig ist. Außerdem kann es bei z. B. schlecht fließenden Schüttgütern zu Anbackungen innerhalb des Produktweges kommen. Backt ein Teil des abzufüllenden Produkts an der Wand an, führt dies bei dem aktuellen Gebinde zu einem Mindergewicht. Löst sich später eine Anbackung ab, so weist das nächste Gebinde ein entsprechendes Übergewicht auf.

Es ist deshalb die Aufgabe der vorliegenden Erfindung, eine Packmaschine zum Füllen von Säcken und ein Verfahren zum Füllen von Säcken zur Verfügung zu stellen, womit eine hohe Abfüllleistung bei hoher Gewichtsgenauigkeit unter Vermeidung von Überfüllung ermöglicht wird.

Diese Aufgabe wird gelöst durch eine Packmaschine mit den Merkmalen des Anspruchs 1. Das erfindungsgemäße Verfahren ist Gegenstand des Anspruchs 11. Bevorzugte Weiterbildungen werden in den Unteransprüchen angegeben. Weitere Vorteile und Merkmale der Erfindung ergeben sich aus dem Ausführungsbeispiel und der allgemeinen Beschreibung.

Eine erfindungsgemäße Packmaschine dient zum Füllen von Säcken und umfasst eine Tragkonstruktion, an der wenigstens ein Fülltopf befestigt ist. Der Fülltopf umfasst ein Förderorgan und dem Fülltopf sind eine Wägeeinrichtung und ein Füllstutzen zugeordnet. Es ist wenigstens eine Steuereinrichtung vorgesehen. Der Fülltopf wird von der Tragkonstruktion und dem zugeordneten Füllstutzen entkoppelt gehalten und wird von der zugeordneten Wägeeinrichtung separat gewogen, um durch einen Differentialwiegevorgang eine vordefinierte Menge eines abzufüllenden Produktes aus dem Fülltopf abzuleiten und durch den Füllstutzen in den Sack einzufüllen. Die Steuereinrichtung und das Förderorgan bilden eine Volumenstromsteuereinrichtung zur Steuerung des Volumenstroms. Die Steuereinrichtung ist dazu ausgebildet, eine Stärke eines Volumenstroms in den Sack über dem Füllvorgang zeitlich zu steuern, sodass ein Füllstand des abzufüllenden Produkts während des Füllvorgangs hochgehalten wird, während gleichzeitig ein Überlauf vermieden wird.

Die erfindungsgemäße Packmaschine hat viele Vorteile. Ein erheblicher Vorteil der erfindungsgemäßen Packmaschine besteht darin, dass der Fülltopf wägetechnisch entkoppelt von der Tragkonstruktion und dem Füllstutzen gehalten wird. Durch den Gewichtsverlauf des Fülltopfes beim Füllvorgang kann auf einfache Art und Weise auf das im Sack enthaltene Produkt zurückgeschlossen werden. Dadurch, dass der Fülltopf wägetechnisch von dem Füllstutzen und dem daran anhängenden Sack entkoppelt ist, kann der Sack schon während des Füllvorgangs grundsätzlich beliebigen Behandlungen unterzogen werden. Deshalb kann schon während des Füllvorgangs eine beliebige Verdichtungseinrichtung auf den Sack einwirken, ohne dass Gefahr besteht, dass dadurch das Wägeergebnis verfälscht und somit eine fehlerhafte Produktmenge in den Sack abgefüllt wird.

Insbesondere bei feinen Schüttgütern, die einen erheblichen Anteil an Luft aufweisen, kann somit der Füllvorgang beschleunigt werden. Eine beispielsweise als Rütteleinrichtung ausgeführte Verdichtungseinrichtung kann praktisch schon mit Beginn des Füllvorgangs auf das im Sack enthaltene Produkt einwirken, sodass praktisch sofort die Entlüftung einsetzt. Eine solche Packmaschine, bei dem jedem Füllstutzen eine Differentialwaage zugeordnet ist, erlaubt eine effektive und genaue Abfüllung unterschiedlichster Produkte und insbesondere schwierig zu füllender Produkte, die beispielsweise zu Anbackungen neigen. Dadurch, dass jedem Sack nur Produkt zugeführt wird, welches durch jeweils eine einzige Wägeeinrichtung abgewogen wird, kann eine hohe Genauigkeit eingehalten und garantiert werden.

In bevorzugten Weiterbildungen weist jeder Fülltopf wenigstens ein Vorratsvolumen auf, welches größer als das maximale Volumen ist, welches in einen Sack einzufüllen ist. Beispielsweise kann das Vorratsvolumen eines Fülltopfes größer oder gleich dem 1,5fachen Volumen sein, dessen Abfüllung vorgesehen ist. Vorzugsweise ist das Vorratsvolumen größer und kann das 2fache, 3fache oder ein noch größeres Mehrfaches des abzufüllenden maximalen Volumens aufweisen. Mit solchen Vorratsvolumina kann eine hohe Abfüllgenauigkeit erzielt werden.

Vorzugsweise ist an der Tragkonstruktion eine Mehrzahl von Fülltöpfen befestigt. In besonders bevorzugten Ausgestaltungen ist die Tragkonstruktion mit den Fülltöpfen um eine zentrale Achse drehbar angeordnet und rotiert im Betrieb getaktet oder sogar kontinuierlich.

In einer vorteilhaften Weiterbildung ist die Steuereinrichtung dazu eingerichtet, mit den Signalen der Wägeeinrichtung das Förderorgan derart zu steuern, dass die vordefinierte Menge aus dem Fülltopf in den Sack einfüllbar ist. Wenn mehrere Fülltöpfe vorgesehen sind, ist es möglich, dass die zentrale Steuereinrichtung die Förderorgane aller Fülltöpfe steuert. Es ist aber auch möglich, dass jeweils eine separate Steuereinrichtung für jeden Fülltopf vorgesehen ist. Möglich ist es auch, dass eine zentrale Steuereinrichtung vorgesehen ist, während jeder Fülltopf eine zusätzliche separate Steuereinrichtung zur lokalen Steuerung des Füllvorgangs aufweist.

Vorzugsweise ist wenigstens eine Verdichtungseinrichtung wenigstens einem Füllstutzen zugeordnet. Besonders bevorzugt wird wenigstens eine Verdichtungseinrichtung insbesondere während des Füllvorgangs betrieben. Besonders bevorzugt ist der Einsatz wenigstens zweier Verdichtungseinrichtungen an wenigstens einem Füllstutzen bzw. einer Fülleinheit. Möglich ist es beispielsweise, dass eine Verdichtungseinrichtung einen Bodenrüttler umfasst oder als ein solcher ausgebildet ist. Möglich und bevorzugt ist es auch, dass eine Verdichtungseinrichtung eine Rüttelflasche umfasst oder als eine solche ausgebildet ist. Genauso möglich ist es auch, dass eine Verdichtungseinrichtung eine Vakuumlanze aufweist. Insbesondere ist wenigstens eine Verdichtungseinrichtung dazu ausgebildet, während des Füllvorgangs von oben in den offenen Sack einzutauchen. Von innen wirkende und in den Sack eintauchende Verdichtungseinrichtungen werden insbesondere bei der Füllung von Offensäcken eingesetzt.

In allen Ausgestaltungen ist es bevorzugt, dass wenigstens eine Verdichtungseinrichtung höhenverstellbar vorgesehen ist. Dabei kann sowohl eine von oben in den Sack eintauchende Rüttelflasche höhenverstellbar vorgesehen sein als auch ein Bodenrüttler unterhalb des zu füllenden Sacks, der von unten auf den Sackboden einwirkt. Möglich ist es aber auch, dass seitliche Verdichtungseinrichtungen vorgesehen sind, die beispielsweise als Pressbacken ausgeführt sind und seitlich auf den Sack drücken. Von außen wirkende Verdichtungseinrichtungen können sowohl bei Packmaschinen zur Offensackabfüllung als auch bei Packmaschinen zur Ventilsackabfüllung eingesetzt werden.

Vorzugsweise ist ein dem Fülltopf zugeordneter Füllstutzen starr mit der Tragkonstruktion und elastisch mit dem Fülltopf verbunden. Das bedeutet, dass der Füllstutzen von der Tragkonstruktion getragen wird, während der Fülltopf gewichtstechnisch entkoppelt von dem Füllstutzen und der Tragkonstruktion angeordnet ist.

Vorzugsweise ist dem Silo wenigstens ein steuerbares Verschluss- oder Dosierorgan zugeordnet. Das Silo dient insbesondere als Vorratsbehälter. Aus dem Silo wird periodisch ein Vorrat in das Vorratsvolumen des Fülltopfs eingebracht, sodass in dem Fülltopf jederzeit ein ausreichendes Vorratsvolumen vorhanden ist, um wenigstens den nächsten Füllvorgang durchzuführen.

Es ist bei rotierbaren Packmaschinen möglich und bevorzugt, dass das Silo mitrotierend an der Tragkonstruktion aufgenommen ist, sodass jederzeit eine Nachfüllung der einzelnen Vorratsbehälter bzw. Fülltöpfe möglich ist. Es ist aber auch möglich, dass das Silo feststehend oberhalb der Tragkonstruktion angeordnet ist, sodass nur in bestimmten Winkelpositionen eine Nachfüllung des Vorratsvolumens des Fülltopfes möglich ist.

Bei Aktivierung des steuerbaren Dosierorgans an dem Silo wird eine Menge abzufüllenden Produkts in dem Fülltopf eingefüllt. Durch die dem Fülltopf zugeordnete Wägeeinrichtung kann diese Menge erfasst werden, sodass daraus die Anzahl möglicher Füllvorgänge abgeleitet werden kann. Deshalb muss die in den Fülltopf einzufüllende Menge nicht vorbestimmt sein, sondern kann auch gewissen und sogar erheblichen Schwankungen unterliegen.

Besonders bevorzugt umfasst das Förderorgan eine Füllturbine, deren Fördergeschwindigkeit insbesondere variabel steuerbar ist. Dadurch wird eine variable Füllgeschwindigkeit ermöglicht, sodass beispielsweise durch Steuerung der Fördergeschwindigkeit der Füllturbine eine Unterteilung in wenigstens einen Grobstrom und in wenigstens einen Feinstrom möglich ist. Möglich ist auch eine kontinuierliche Reduktion der Füllgeschwindigkeit, bis das angestrebte Füllgewicht erreicht ist.

Möglich und bevorzugt ist auch der Einsatz anderer Förderprinzipien als Füllorgane, wie z. B. die Luftfülltechnik mit Druckkammer oder den Einsatz von Schneckenförderorganen oder der Einsatz von Fallrohrorganen.

Bevorzugterweise ist dem Förderorgan wenigstens eine Absperreinrichtung und/oder ein Absperrventil zugeordnet und insbesondere ist die Absperreinrichtung als Absperrventil in Form eines Sperrschiebers oder Quetschventils oder dergleichen ausgeführt. Durch einen elastischen Schlauch, der den Fülltopf gewichtstechnisch entkoppelt und mit dem Füllstutzen verbindet, strömt das Produkt in den Sack. Die mechanische Entkopplung des Fülltopfs kann z. B. über Gegenlenker erfolgen.

In allen Ausgestaltungen ist es möglich und bevorzugt, dass wenigstens ein Sensor zur Erfassung eines Füllstands vorgesehen ist. Ein Sensor, der den Füllstand im Sack während des Füllvorgangs erfasst, bietet erhebliche Vorteile, da damit eine füllstandssensitive und füllstandsgesteuerte Füllung möglich ist. Dadurch kann sichergestellt werden, dass im Sack jederzeit ein möglichst hoher Füllstand vorliegt, der andererseits so niedrig ist, dass eine Verschmutzung der oberen Sackwandung oder ein Austritt von abzufüllendem Produkt aus der oberen Öffnung des Sacks zuverlässig vermieden wird. Dies gilt insbesondere für Offensäcke.

Vorzugsweise weist der Füllstutzen eine Füllöffnung auf. Der Füllstutzen bei der Abfüllung von Offensäcken ist insbesondere im Wesentlichen hängend ausgerichtet, sodass durch eine relativ zum Füllstutzen gerichtete Aufwärtsbewegung ein offener Sack an dem Füllstutzen anhängbar ist. Bei Ventilsackmaschinen ist der Füllstutzen eher horizontal ausgerichtet und kann durch bekannte Maschinen automatisch oder auch manuell bestückt werden.

Die Steuereinrichtung dient zusammen mit dem steuerbaren Füllorgan als Volumensteuereinrichtung, um während des Füllvorgangs eine Stärke des Volumenstroms in den offenen Sack zu steuern. Ein Sensor zur Erfassung des Füllstands kann zur zeitlichen Steuerung eingesetzt werden. Andernfalls kann auf historische Daten oder Erfahrungswerte zurückgegriffen werden, um eine optimale Füllung des Sacks zu gewährleisten. In allen Fällen dient das Förderorgan als Dosiereinrichtung zum Transport des abzufüllenden Produktes aus dem Fülltopf in den offenen Sack. Die Wägeeinrichtung dient als Differentialwaage und bestimmt aus der Abnahme des Gewichts des Fülltopfes das in den Sack eingefüllte Gewicht.

Das erfindungsgemäße Verfahren dient zum Füllen von Säcken und wird mit einer Packmaschine durchgeführt, bei der an einer Tragkonstruktion wenigstens ein Fülltopf befestigt ist. Der bzw. jeder Fülltopf umfasst ein Förderorgan. Dem Fülltopf sind eine Wägeeinrichtung und ein Füllstutzen zugeordnet. Dabei ist der Fülltopf von der Tragkonstruktion und dem zugeordneten Füllstutzen entkoppelt gehalten. Der Fülltopf wird von der zugeordneten Wägeeinrichtung separat gewogen, um mittels eines Differentialwiegevorgangs über eine Steuereinrichtung gesteuert eine vordefinierte Menge eines abzufüllenden Produkts aus dem Fülltopf abzuleiten und durch den Füllstutzen in den Sack einzufüllen. Die Steuereinrichtung und das Förderorgan bilden eine Volumenstromsteuereinrichtung zur Steuerung des Volumenstroms. Die Steuereinrichtung steuert über dem Füllvorgang eine Stärke eines Volumenstroms in den Sack zeitlich derart, dass ein Füllstand des abzufüllenden Produkts während des Füllvorgangs hochgehalten wird, während gleichzeitig ein Überlauf vermieden wird.

Auch das erfindungsgemäße Verfahren hat viele Vorteile, da es eine effektive Abfüllung von Schüttgütern in Säcke mit hoher Genauigkeit erlaubt.

Vorzugsweise wird während des Füllvorgangs die Stärke des Volumenstromes in Abhängigkeit von der Füllzeit zeitlich gesteuert. Vorzugsweise wird dabei insbesondere bei Abfüllung in Offensäcke zu Beginn des Füllvorgangs mit maximaler Volumenstromstärke gefüllt, bis ein vorgesehenes Niveau erreicht wird. Im Anschluss daran wird während der restlichen Füllzeit der Füllstand möglichst hochgehalten, um eine schnelle Befüllung und eine effektive Entlüftung zu gewährleisten.

Dazu kann ein Füllstand während des Füllvorgangs erfasst und der Volumenstrom in Abhängigkeit von dem Füllstand gesteuert werden.

Insgesamt wird bei der Abfüllung von Offensäcken der Füllstand des abzufüllenden Produkts während des Füllvorgangs hochgehalten, während gleichzeitig ein Überlauf oder eine Verschmutzung der oberen Sackwandung vermieden wird. Andernfalls muss die obere innere Sackwandung vor dem Verschließen gereinigt werden, um einen dichten Verschluss zu gewährleisten.

In allen Fällen ist es möglich, dass das Förderorgan getaktet betrieben und insbesondere periodisch ein- und ausgeschaltet wird. Möglich und bevorzugt ist es aber auch, dass die Füllgeschwindigkeit des Förderorgans variabel und kontinuierlich oder quasi kontinuierlich gesteuert wird.

Möglich ist es auch, vorzugsweise den Füllweg periodisch zu verkleinern und zu vergrößern. Dabei ist es möglich, dass der Füllweg teilweise oder vollständig verschließbar ist.

Die Packmaschine kann mit mehreren Fülltöpfen ausgerüstet sein und kann insbesondere kontinuierlich oder getaktet rotierend betrieben werden.

Insgesamt stellt die Erfindung eine vorteilhafte Vorrichtung und ein vorteilhaftes Verfahren zur Verfügung, mit dem es schon während des Füllvorgangs möglich ist, den Sack beliebigen Behandlungen zu unterziehen, um den Füllvorgang und das Entlüften zu beschleunigen. Die Erfindung kann bei Packmaschinen zum Füllen von Offensäcken und auch bei Packmaschinen zum Füllen von Ventilsäcken eingesetzt werden.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Fig. 1: eine schematische Draufsicht auf eine erfindungsgemäße Packmaschine;

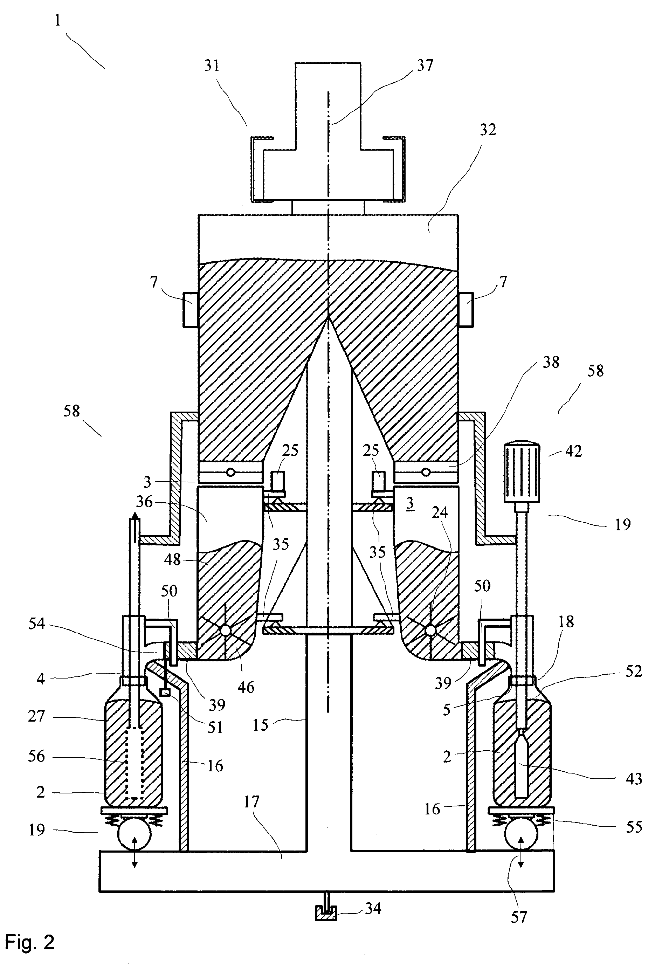

- Fig. 2: eine Seitenansicht der Packmaschine nach Fig. 1;
- Fig. 3: den Gewichtsverlauf und den Füllstandsverlauf eines offenen Sacks während des Füllvorgangs;
- Fig. 4: die Fördergeschwindigkeit des Förderorgans während des in Fig. 3 dargestellten Füllvorgangs; und
- Fig. 5: die Fördergeschwindigkeit des Förderorgans während eines weiteren Füllvorgangs.

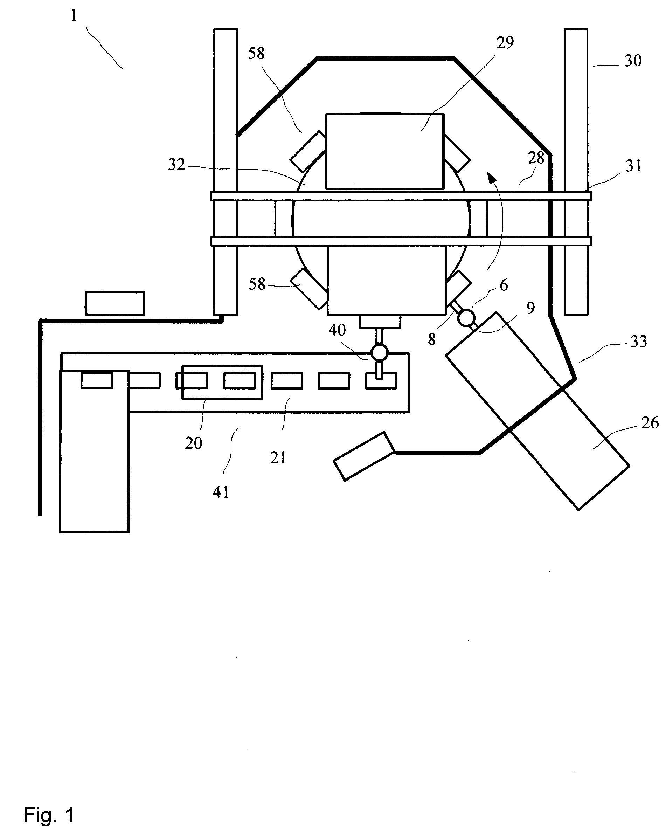

Mit Bezug auf die beiliegenden Figuren wird im Folgenden ein Ausführungsbeispiel einer erfindungsgemäßen Packmaschine 1 erläutert, welche in Fig. 1 in einer schematischen Draufsicht abgebildet ist.

Die Packmaschine 1 ist hier rotierbar ausgeführt und dient zum Füllen von offenen Säcken 2. Die Packmaschine 1 verfügt über eine Mehrzahl von Fülleinheiten 58. Jede Fülleinheit 58 weist einen Fülltopf 3 auf, dem hier jeweils ein Füllstutzen 4 zugeordnet ist. An der hier dargestellten Packmaschine 1 können zwischen etwa zwei und sechzehn Füllstutzen 4 vorgesehen sein. Grundsätzlich ist es aber auch möglich, noch mehr Füllstutzen 4 an einer rotierbaren Packmaschine 1 anzubauen. Möglich und bevorzugt sind auch Packmaschinen, die feststehend und z. B. als Einzelstutzenmaschine oder Reihenpacker ausgeführt sind.

Die Packmaschine 1 dreht in diesem Beispiel entgegen dem Uhrzeigersinn in die Drehrichtung 28. Die rotierbare Packmaschine 1 wird kontinuierlich rotierend betrieben, sodass die Füllstutzen 4 mit im Wesentlichen konstanter Geschwindigkeit um eine zentrale Achse 37 drehen. Die Geschwindigkeit hängt insbesondere von dem abzufüllenden Produkt und dessen Verdichtungsverhalten ab. Das abzufüllende Material wird über einen Einlauftrichter 29 einem zentralen und hier mitdrehenden Silo 32 zugeführt. Von dem Silo 32 getrennt ist jedem Fülltopf 3 ein separates Vorsilo 48 zugewiesen, sodass jedem Füllstutzen 4 ein separater Zwischenbunker zugeordnet ist.

Die Füllstutzen 4 zur Befüllung der offenen Säcke 2 sind hier vertikal ausgerichtet, sodass die Füllöffnung 5 senkrecht nach unten zeigt. Es ist aber auch möglich, dass die Füllöffnung zur Senkrechten geneigt ausgerichtet ist. Beispielsweise kann ein Winkel von fünf Grad, zehn Grad oder auch zwanzig Grad oder mehr zur Senkrechten vorgesehen sein. Offene Säcke 2, die auch als Offensäcke bezeichnet werden, werden hier von unten an die untere Füllöffnung 5 der Füllstutzen 4 angehängt. Es ist in anderen Ausgestaltungen auch möglich, Ventilsäcke zu füllen, wobei in solchen Ausgestaltungen die Füllstutzen eher horizontal angeordnet werden.

Zum Füllen wird ein offener Sack 2 ergriffen und die obere Sackwandung 18 geöffnet, sodass die obere Sacköffnung entsteht. Es werden vorzugsweise Sauger und Greifer verwendet, sodass eine der Querschnittsform des Füllstutzens 4 entsprechende Sacköffnung an dem oberen Ende des Offensacks 2 entsteht. Der offene Sack 2 wird mit seiner oberen Sackwandung 18 durch diese definiert gehalten, bis der offene Sack 2 auf den Füllstutzen 4 aufgeschoben ist und dort durch hier nicht dargestellte Greifer wiederum definiert gehalten wird.

Das Aufstecken der offenen Säcke 2 erfolgt mit einer Übergabeeinrichtung 6, die einer Sackbildungseinrichtung 26 nachgeschaltet ist. In der Sackbildungseinrichtung 26 werden hier während des kontinuierlichen Betriebs aus einer Schlauchfolie die einzelnen Offensäcke 2 hergestellt. Dazu wird von der Schlauchfolie jeweils eine entsprechende Länge abgeschnitten und die Bodennaht in den Offensack 2 eingefügt. Es können aber auch vorgefertigte Säcke 2 verwendet werden.

Zum Aufstecken eines zu füllenden offenen Sacks 2 wird ein z. B. an dem Greifarm 8 der Übergabeeinrichtung 6 aufgenommener offener Sack 2 an einen Füllstutzen 4 der Packmaschine 1 angehängt. Die Übergabeeinrichtung 6 rotiert anschließend weiter, sodass im nächsten Schritt ein Sack mit dem Greifarm 9 aufgesteckt wird, während gleichzeitig der Greifarm 8 einen neuen Sack übergeben bekommt.

Während der Rotation, die hier entgegen dem Uhrzeigersinn erfolgt, werden die offenen Säcke 2 gefüllt. Bei anderen Anlagenkonfigurationen ist eine Rotation im Uhrzeigersinn möglich. Während der Rotation erfolgt der Füllvorgang. Gleichzeitig wird über die Verdichtungseinrichtungen 19 eine Verdichtung des Produktes erzielt, wodurch der Produktspiegel reduziert wird. Durch die Verdichtung des Produkts werden insgesamt kürzere offene Säcke 2 benötigt und es wird ein prall gefüllter offener Sack 2 hergestellt, der nicht nur wenig Folienmaterial benötigt, sondern auch optisch ansprechend aussieht. Die Verdichtungseinrichtungen 19 oder einzelne Verdichtungseinrichtungen 19 sind insbesondere höhenverstellbar vorgesehen.

Die zur Herstellung der offenen Säcke 2 - im Vergleich zu Säcken aus Papier - vorzugsweise verwendete Folie führt dazu, dass die offenen Säcke 2 eine relativ geringe Eigensteifigkeit aufweisen. Es wird jederzeit eine genau definierte Führung der offenen Säcke 2 gewährleistet, um relativ geringe Sacklängen und geringe Sacküberstände sowie einen sicheren Betrieb zu ermöglichen.

Wenn der offene Sack 2 mit der vorgesehenen Menge gefüllt ist und die Winkelposition der Abnahmeeinrichtung 40 erreicht, wird der offene Sack 2 von dem Füllstutzen 4 abgenommen. Die Abnahme des offenen Sacks 2 von dem Füllstutzen erfolgt hier während der kontinuierlichen Drehung der Packmaschine 1. Der abgenommene Sack 2 wird durch die Abnahmeeinrichtung 40, die ebenfalls rotierbar ausgeführt ist, an die Bearbeitungseinrichtung 41 übergeben, die eine Linearführung 21 und eine oder mehrere Verschließeinrichtungen 20 umfasst. Durch die wenigstens eine Verschließeinrichtung 20 wird das oben offene Ende des Offensacks 2 verschlossen. Auch bei der Abnahme wird jederzeit gewährleistet, dass der offene Sack 2 zu jedem Zeitpunkt definiert gehalten und geführt wird, sodass ein definierter Verschluss der Offensäcke 2 gewährleistet werden kann.

Ein Schutzzaun 33 kann vorgesehen sein, damit ein Betreten des Gefahrenbereichs verhindert wird.

Die rotierbare Packmaschine 1 wird bevorzugt an einem Gestell 30 hängend gelagert, wobei Träger 31 die rotierbare Packmaschine halten. Eine Führung oder Zentrierung 34 auf dem Boden dient zur definierten Führung. Im oberen Bereich des rotierenden Teils kann ein Silo 32 zur Zwischenlagerung von Produkt vorgesehen sein. Möglich ist es in anderen Ausgestaltungen auch, ein feststehendes Silo 32 oberhalb des rotierenden Teils der Packmaschine 1 anzuordnen.

Jedem Füllstutzen 4 sind hier im Ausführungsbeispiel zwei separate Verdichtungseinrichtungen 19 zugeordnet. Eine Verdichtungseinrichtung 19 ist unterhalb des Sackbodens vorgesehen. Der Sackboden des zu füllenden offenen Sacks 2 steht wenigstens während eines Teils des Füllvorgangs auf der Verdichtungseinrichtung 19 auf, die hier als Rütteleinrichtung und insbesondere als Bodenrüttler 55 ausgeführt ist und die Schwingungen in vertikaler Richtung auf den zu füllenden offenen Sack 2 aufbringt, um das Produkt 27 im Inneren des offenen Sacks 2 während des Füllvorgangs zu verdichten und das Produkt 27 zu entlüften. Der Bodenrüttler 55 ist in Richtung des Pfeils 57 höhenverstellbar vorgesehen und kann sowohl weiter nach oben gefahren als auch abgesenkt werden. Der Bodenrüttler 55 wird hier von dem Tragboden 17 der Tragkonstruktion 15 unterstützt.

Des Weiteren ist eine weitere Verdichtungseinrichtung 19 vorgesehen, die ebenfalls Vibrationen in das abgefüllte Schüttgut einbringt. Diese Verdichtungseinrichtung 19 umfasst einen Antrieb 42 und eine hier ebenfalls über Vibrationsbewegungen wirkende Rüttelflasche 43, die während des Füllvorgangs in das Innere des zu füllenden offenen Sackes 2 von oben eintaucht. Dazu weist der Füllstutzen 4 eine Durchgangsöffnung auf, durch die die Rüttelflasche 43 von oben in den zu füllenden offenen Sack 2 eintauchen kann.

Vorzugsweise taucht die Rüttelflasche 43 nach dem Anhängen des zu füllenden offenen Sacks 2 von oben durch den Füllstutzen 4 in den geöffneten offenen Sack 2 ein. Nach beendetem Füllvorgang wird die Rüttelflasche 43 nach oben herausgezogen.

Es ist auch möglich, das ein zu füllender offener Sack 2 von unten an den Füllstutzen 4 angehangen wird, während sich die Rüttelflasche schon durch den Füllstutzen nach unten erstreckt, wenn eine geeignete Anhängemechanik für den zu füllenden offenen Sack 2 vorhanden ist.

Möglich ist es auch, die obere Rütteleinrichtung 19 als Vakuumlanze 56 auszuführen, die von oben in den Sack 2 eintaucht und über das angelegte Vakuum Luft aus dem Inneren des Sacks 2 absaugt, während über geeignete Filter der Austritt von Material verhindert wird. Eine solche Ausgestaltung ist schematisch auf der linken Seite von ig. 2 abgebildet. Möglich ist es auch, dass wahlweise oder produktabhängig oder nacheinander eine Rüttelflasche und eine Vakuumlanze von oben eingeführt werden.

Während des Füllvorgangs wird kontinuierlich oder in periodischen Abständen ein Maß für das Gewicht des bislang abgefüllten Produkts 27 ermittelt. Dazu ist eine Wägeeinrichtung 25 vorgesehen, die hier als Differentialwaage ausgeführt ist. Die Differentialwaage ermittelt das Gewicht des Fülltopfes 3 inklusive der sich darin befindenden Anbauten wie z. B. die Füllturbine 46 als Füll- bzw. Förderorgan 24 und das sich im Fülltopf 3 bzw. im Vorsilo 48 befindende abzufüllende Produkt 27. Aus der Gewichtsabnahme des Fülltopfes 3 wird das Gewicht des in den Sack 2 abgefüllten Produktes 27 kontinuierlich oder in geringen Zeitabständen ermittelt.

Der Füllstutzen 4 ist hier über einen Tragarm 16 starr mit der Tragkonstruktion 15 der Packmaschine 1 verbunden, kann aber auch z. B. ab- oder hochklappbar vorgesehen sein. Der Füllstutzen 4 ist über einen elastischen Schlauch 39 gewichtsmäßig entkoppelt mit dem Fülltopf 3 verbunden. Der elastische Schlauch 39 ist Teil des Produktweges. Durch den elastischen Schlauch 39 wirken sich Vibrationen an dem Füllstutzen 4, die z. B. über die Verdichtungseinrichtungen 19 auf den Füllstutzen übertragen werden, nicht auf das mit der Wägeeinrichtung 25 ermittelte Gewicht aus. Die als Differentialwaage arbeitende Wägeeinrichtung 25 erfasst jederzeit ein korrektes Maß für das in den Sack eingefüllte Produkt. Der Fülltopf ist über Gegenlenker 35 parallelogrammartig geführt abgestützt.

Das erfasste Gewichtsmaß ist unabhängig von dem Sackgewicht und wird durch evtl. gleichzeitig erfolgende Behandlungen des Sacks nicht verfälscht. Die Außenoberfläche kann gepresst werden, der Sack kann unter Vibrationen gesetzt werden und/oder es kann aus dem Inneren Luft abgesaugt werden. Das erfasste Gewicht wird durch diese Maßnahmen nicht oder nur in einem innerhalb der Wägetoleranzen liegenden Bereich beeinflusst.

Während des Füllvorgangs wird mittels der Füllturbine 46 abzufüllendes Produkt 27 aus dem Vorratsvolumen 36 des Fülltopfes 3 in den Sack 2 transportiert. Das Vorratsvolumen 36 des Vorsilos 48 ist größer bemessen als das maximal in einen Sack 2 abzufüllende Volumen. Insbesondere ist das Vorratsvolumen 36 wenigstens 50 % größer und vorzugsweise wenigstens zwei- oder sogar dreimal so groß wie das maximal in einen Sack 2 abzufüllende Volumen.

Wenn der in dem Fülltopf 3 verbleibende Vorrat nicht mehr ausreicht oder aber ein bestimmtes Maß unterschreitet, wird das Verschlussorgan 38 geöffnet und von oben weiteres Produkt in den Fülltopf eingelassen. Währenddessen findet kein Füllvorgang statt. Vor dem Öffnen und nach dem Schließen wird das Gewicht des Fülltopfes erfasst, um die eingefüllte Menge kontrollieren und erfassen zu können. Zur gezielten Steuerung kann das Verschlussorgan 38 kontrolliert steuerbar sein und auch als ein Füllorgan zur definierten Einfüllung von abzufüllendem Produkt in das Vorratsvolumen 36 des Fülltopfs ausgebildet sein.

Da das Einzelgewicht der beteiligten Komponenten jeweils bekannt ist, kann aus dem mit der Wägeeinrichtung 25 gemessenen Gesamtgewicht auf das Gewicht des abgefüllten Schüttguts bzw. Produkts 27 zurückgeschlossen werden. Durch die Entkopplung des Füllstutzens 4 und der unteren und der oberen Verdichtungseinrichtungen 19 von dem Fülltopf 3 kann das Gewicht des Sacks und des eingefüllten Produkts 27 präzise ermittelt werden, während die Verdichtungseinrichtungen 19 das abgefüllte Produkt gleichzeitig verdichten. So ist auch bei schwierigen und z. B. anhaftenden Produkten eine hohe Abfüllleistung bei hoher Genauigkeit möglich.

Spätestens, wenn der Produktvorrat in dem Fülltopf 3 kleiner als die in einen Sack 2 abzufüllende Menge ist, wird das Verschlussorgan 38 aktiviert und aus dem Silo 32 ein neuer Vorrat in den Fülltopf 3 abgefüllt. In der Regel wird dafür gesorgt, dass ein Mindestfüllstand in dem Fülltopf 3 nicht unterschritten wird.

Mit dem aktuellen Gewicht des Fülltopfes 3 kann das Förderorgan 24 als Dosiereinrichtung entsprechend gesteuert werden, um eine genau definierte Menge an Schüttgut in den zu füllenden offenen Sack 2 einzubringen.

Das Förderorgan 24 umfasst hier eine Füllturbine 46 und ein im Produktweg danach angeordnetes Sperrventil 50, welches beispielsweise als Schieberventil oder Quetschventil ausgeführt sein kann. Die z. B. als Absperrventil ausgeführte Absperreinrichtung 50 ist insbesondere in einem elastischen Bereich 39 des Füllwegs 54 vorgesehen, der an der Trennstelle zwischen dem gewogenen Fülltopf 3 zu dem Füllstutzen 4 angeordnet ist. Dadurch wird eine Entkoppelung des gewogenen Systems erreicht. Der dort vorzugsweise durch einen elastischen Schlauch gebildete Füllweg 54 kann durch ein Scherenventil oder dergleichen abgequetscht werden, um den Füllweg 54 zu verschließen. Zur noch besseren Entkopplung kann ein erster elastischer Schlauch zur gewichtstechnischen Entkopplung dienen. An einem davon separat angeordneten zweiten elastischen Schlauch wirkt dann vorzugsweise das Scherenventil oder dergleichen, sodass durch das Scherenventil eingebrachte Kräfte sich nicht nachteilig auf das ermittelte Gewicht auswirken. Alternativ oder ergänzend dazu kann die Füllturbine 46 in ihrer Drehzahl reduziert oder vollständig abgeschaltet werden.

Des Weiteren kann ein Sensor 51 vorgesehen sein, der während des Füllvorgangs außerhalb des offenen Sacks 2 oder auch innerhalb des offenen Sacks 2 angeordnet sein kann, um einen Füllstand 52 während des Füllvorgangs zu ermitteln. Beispielsweise kann der Sensor 51 kapazitiv oder induktiv arbeiten oder über beispielsweise ein Ultraschallverfahren oder ein optisches Verfahren den Füllstand 52 im Sack 2 während des Füllvorgangs ermitteln.

Über eine Steuereinrichtung 7, die jeweils einer Fülleinheit 58 zugeordnet sein kann, oder die zentral die Steuerung für alle Fülleinheiten 58 übernimmt, kann mittels der jeweils ermittelten Füllstandswerte 52 die Dosiereinrichtung bzw. das Förderorgan 24 so gesteuert werden, dass der Füllstand 52 möglichst hoch ist und gleichzeitig nicht bis zum Füllstutzen 4 reicht, sodass eine Verschmutzung des oberen Randes der Sackwandung 18 zuverlässig vermieden wird.

Dadurch kann einerseits eine möglichst effektive und schnelle Füllung gewährleistet werden, während andererseits der obere Rand der Sackwandung 18 sauber bleibt und eine dauerhaft feste Verschlussnaht nach dem Füllvorgang gewährleistet werden kann.

Es ist auch möglich, den Füllvorgang ohne einen Sensor 51 in entsprechender Weise zu steuern. Dadurch wird beispielsweise auf Erfahrungsdaten zurückgegriffen und der Füllvorgang für ein abzufüllendes Produkt über Versuche experimentell so ermittelt, dass ein optimaler Verlauf des Füllstands ermöglicht wird.

Die Steuereinrichtung 7 und das Förderorgan 24 und ein eventuell vorhandener Sensor 51 bilden insgesamt eine Volumenstromsteuereinrichtung zur Steuerung des Volumenstroms.

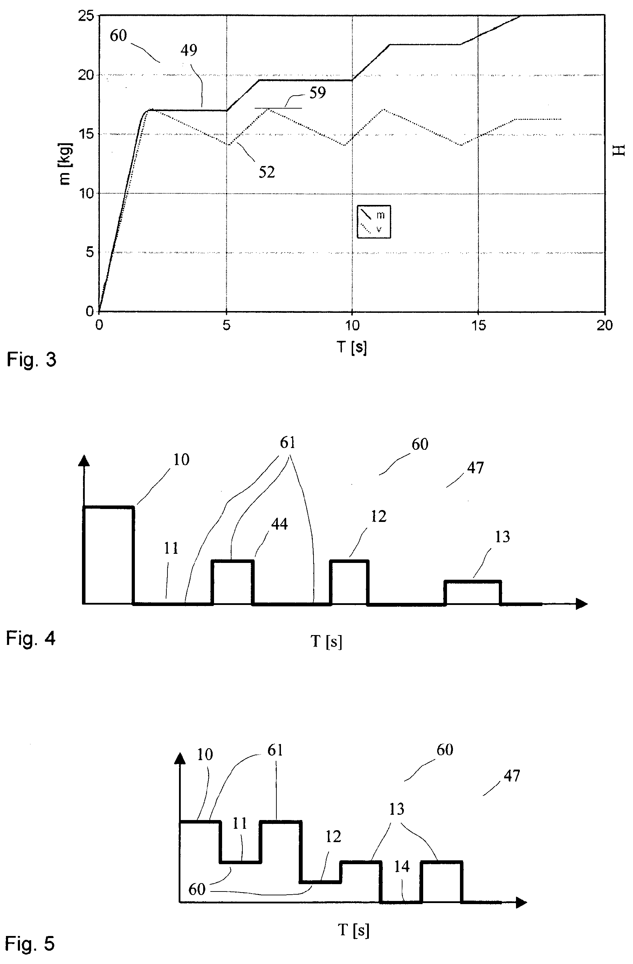

Fig. 3 zeigt den typischen Gewichtsverlauf und den Füllstandsverlauf bei einem Füllvorgang.

Der gesamte Füllvorgang benötigt hier etwa 17 Sekunden. Abgefüllt werden in diesem Beispiel 25 kg Schüttgut. Beim Starten des Füllvorgangs wird das Förderorgan vorzugsweise mit maximaler Fördergeschwindigkeit betrieben, um einen hohen Volumenstrom zu Beginn des Füllvorgangs in den zu füllenden offenen Sack hinein gelangen zu lassen. Der Massenstrom ergibt sich aus der Steigung des Gewichts 49 über der Zeit T. Wenn der Füllstand bzw. die Höhe H ein vorgesehenes Maß 59 erreicht, welches entweder empirisch ermittelt wurde oder aber durch einen Sensor 51 detektiert wird, wird die Fördergeschwindigkeit 44 des Förderorgans 24 reduziert oder aber sogar abgeschaltet.

Die Fördergeschwindigkeit 44 und damit näherungsweise der Volumenstrom 47 des Förderorgans 24 ist für den Füllvorgang nach Figur 3 in Figur 4 über der Zeit T dargestellt.

Zu Beginn des Füllvorgangs wird mit maximaler Fördergeschwindigkeit 10 das abzufüllende Produkt 27 in den zu füllenden offenen Sack 2 hineingefördert. Beispielsweise kann die Drehzahl einer Füllturbine 46 zu Beginn des Füllvorgangs besonders hoch gewählt werden.

Nach Erreichen der vorgesehenen maximalen Füllstandshöhe 59 wird die Fördergeschwindigkeit 44 reduziert, wozu beispielsweise die Füllturbine abgeschaltet wird.

Die Fördergeschwindigkeit 11 in dem nachfolgenden Zeitintervall sinkt folglich auf null. Wenn der Produktspiegel durch die gleichzeitig erfolgende Verdichtung durch die Verdichtungseinrichtung 19 um ein vorbestimmtes Maß abgesunken ist, wird die Füllturbine 46 wieder eingeschaltet und beispielsweise mit einer geringeren Fördergeschwindigkeit 12 betrieben, bis der Füllstand 52 wieder das vorgesehene maximale Niveau erreicht hat.

Es kann sich eine Beruhigungsphase anschließen, in der die Füllturbine abgeschaltet bleiben kann. Durch die gleichzeitig erfolgende Verdichtung, die auch schon durch ein natürliches Ausgasen erfolgt und welche durch die Verdichtungseinrichtungen 19 erheblich verstärkt wird, reduziert sich das Volumen des Schüttguts über der Zeit. Schließlich wird die Füllturbine 46 erneut eingeschaltet und mit der Fördergeschwindigkeit 12 wird wieder Produkt in den zu füllenden offenen Sack 2 eingefüllt. Dabei steigt das Gewicht des abgefüllten Produkts 27 zu den Betriebszeitpunkten der Füllturbine 46 entsprechend an. Tatsächlich gemessen wird hier die Abnahme des Gewichts des zugehörigen Fülltopfs 3, welches mit der Wägeeinrichtung 25 erfasst wird. Daraus wird der hier dargestellte Gewichtsverlauf abgeleitet.

Gegen Ende des Füllvorgangs, wenn das abzufüllende Gewicht nahezu schon erreicht ist und beispielsweise nur noch 10 % des abzufüllenden Gewichts fehlen, kann die Fördergeschwindigkeit 44 der Füllturbine 46 noch weiter reduziert werden und beispielsweise nur noch mit halber Drehzahl gefördert werden. Diese Fördergeschwindigkeit 13 ergibt sich gegen Ende des Füllvorgangs, sodass die Gewichtssteigung über der Zeit während der Fördergeschwindigkeit 13 entsprechend geringer ist, bis das vorgesehene Gesamtgewicht erreicht wird.

Selbstverständlich können nicht nur vier Förderintervalle vorhanden sein, wie es in den Figuren 3 und 4 abgebildet ist, sondern es können auch 5, 6 oder mehr Förderintervalle oder auch weniger - beispielsweise 2 oder 3 Förderintervalle - vorgesehen sein, bis der offene Sack 2 gefüllt ist. Die Anzahl und Art der Intervalle hängt insbesondere von dem abzufüllenden Produkt und auch von der Gebindegröße ab.

In anderen Ausgestaltungen ist es auch möglich, dass die Fördergeschwindigkeit 44 des Förderorgans 24 kontinuierlich variierend betrieben wird, sodass sich ab Erreichen des maximal vorgesehenen Füllstands keine weitere Volumenzunahme, sondern lediglich - entsprechend abhängig von der fortschreitenden Verdichtung des Produkts - eine Gewichtszunahme bis zum Erreichen des vordefinierten Gewichts erfolgt.

Es ist möglich, das die reduzierte Fördergeschwindigkeit 13 gemäß Figur 4 durch eine Reduktion der Drehzahl der Füllturbine 46 erreicht wird. Möglich ist es aber auch, dass eine Reduktion der Fördergeschwindigkeit 13 durch ein teilweises Schließen des Füllweges 54 mittels der Absperreinrichtung 50 erreicht wird.

Figur 5 zeigt einen anderen Füllvorgang, bei dem der Füllvorgang 60 in hier beispielsweise gleichbleibend lange Füllintervalle 61 aufgeteilt ist. Zunächst wird nach Start des Füllvorgangs im ersten Füllintervall 61 die maximale Fördergeschwindigkeit 10 eingestellt. Es folgt ein Füllintervall 61 mit z. B. halber Fördergeschwindigkeit 11, um bei gleichzeitig aktivierter Verdichtungseinrichtung 19, 43 das Volumen innerhalb des Sacks 2 durch Entlüften während des weiteren Füllens wieder zu reduzieren. Danach folgt wieder ein Intervall 61 mit höherer und hier z. B. maximaler Fördergeschwindigkeit 10. Anschließend wird bei immer noch gleichzeitig aktivierten Verdichtungseinrichtungen 19, 43 eine Fördergeschwindigkeit 12 eingestellt, die z. B. 25 % der maximalen Fördergeschwindigkeit 10 betragen kann, um bei immer noch erfolgender Verdichtung und langsamerer Füllung eine Volumenreduktion zu bewirken. Nach diesem Förderintervall wird eine Fördergeschwindigkeit 13 eingestellt, die größer als die Fördergeschwindigkeit 14 ist. Im anschließenden Förderintervall wird schließlich die Fördergeschwindigkeit 12 von Null eingestellt. Als letztes Förderintervall folgt hier wieder eine Fördergeschwindigkeit 13, mit welcher das Endgewicht erreicht wird, bei welchem abgeschaltet wird. Die Fördergeschwindigkeiten können in allen Fällen kontinuierlich oder in festen Schritten periodisch erhöht und wieder verringert werden. Vorzugsweise wird während des gesamten Füllvorgangs 60 wenigstens eine Verdichtungseinrichtung 19 betrieben.

Durch die Erfindung wird ein einfacher Aufbau ermöglicht, der eine präzise Abfüllung von Schüttgütern in offene Säcke 2 mit hoher Geschwindigkeit und Zuverlässigkeit ermöglicht. Dadurch, dass das Förderorgan nicht nur zur Steuerung des abzufüllenden Gewichts als Dosiereinrichtung eingesetzt werden kann, sondern auch zur Steuerung der Fördergeschwindigkeit kann gegenüber Anlagen aus dem Stand der Technik die Bauhöhe massiv verringert werden. Ein Zwischenspeicher für das mit einer Nettowaage abgemessene Produkt ist nicht nötig, sodass die Bauhöhe gegebenenfalls sogar halbiert werden kann, was erhebliche Kosten auch an der umgebenden Anlage einspart, da die benötigte Gebäudehöhe und die Hubhöhe für das zu fördernde Produkt geringer sind.

Durch die verringerte Bauhöhe wird bei der Abfüllung von Offensäcken gegenüber dem Füllvorgang im Nettowägeverfahren auch der Weg reduziert, den das Produkt im freien Fall während des Füllvorgangs zurücklegt. Dadurch wird auch der Anteil der Luft reduziert, den das Schüttgut mit in den offenen Sack 2 hinein transportiert. Versuche haben gezeigt, dass der Luftanteil um 10, 20 oder sogar 30 % reduziert werden kann, wodurch eine geringere Verdichtungszeit benötigt wird. Das führt wiederum zu einer erheblich effektiveren und schnelleren Befüllung.

Dadurch wird mit der erfindungsgemäßen Packmaschine eine höhere Abfüllrate ermöglicht, während gleichzeitig der Aufwand sinkt.

Außerdem kann durch den kürzeren Produktweg während des Füllvorgangs das Anbacken von Produkt besser vermieden werden. Durch die effektivere Abfüllung ist es auch möglich, schwer fließende Produkte abzufüllen, die mit den Packmaschinen aus dem Stand der Technik nicht oder nur schwer oder nur mit Zusatzmaßnahmen abgefüllt werden konnten. Eine fehlerhafte Gewichtserfassung durch anbackende Produkte im Produktweg kann zuverlässig vermieden werden.

Während des gesamten Füllvorgangs kann ohne Rücksicht auf einen Wägevorgang der zu füllende Sack 2 jederzeit beliebigen Behandlungen unterzogen werden, ohne das Wägeergebnis zu verfälschen. Eine separate Ruhephase muss nicht vorgesehen sein. Ungenaue Abfüllergebnisse durch sich aufsummierende Toleranzen mehrerer Waagen können prinzipbedingt vermieden werden. Es wird eine hohe Abfüllleistung bei hoher Abfüllgenauigkeit ermöglicht, ohne das Wägeergebnis in unzulässiger Weise zu verfälschen.

**Bezugszeichenliste:**

| | | | |
|---|---|---|---|
| 1 | Packmaschine | 32 | Silo |
| 2 | Sack | 33 | Schutzzaun |
| 3 | Fülltopf | 34 | Zentrierung |
| 4 | Füllstutzen | 35 | Gegenlenker |
| 5 | Füllöffnung | 36 | Vorratsvolumen |
| 6 | Übergabeeinrichtung | 37 | zentrale Achse |
| 7 | Steuereinrichtung | 38 | Verschlussorgan |
| 8 | Greifarm | 39 | elastischer Schlauch |
| 9 | Greifarm | 40 | Abnahmeeinrichtung |
| 10 | Fördergeschwindigkeit | 41 | Bearbeitungseinrichtung |
| 11 | Fördergeschwindigkeit | 42 | Antrieb |
| 12 | Fördergeschwindigkeit | 43 | Rüttelflasche |
| 13 | Fördergeschwindigkeit | 44 | Fördergeschwindigkeit |
| 14 | Fördergeschwindigkeit | 46 | Füllturbine |
| 15 | Tragkonstruktion | 47 | Volumenstrom |
| 16 | Tragarm | 48 | Vorsilo |
| 17 | Tragboden | 49 | Gewicht |
| 18 | Sackwandung | 50 | Absperreinrichtung |
| 19 | Verdichtungseinrichtung | 51 | Sensor |
| 20 | Verschließeinrichtung | 52 | Füllstand |
| 21 | Linearführung | 54 | Füllweg |
| 24 | Förderorgan | 55 | Bodenrüttler |
| 25 | Wägeeinrichtung | 56 | Vakuumlanze |
| 26 | Sackbildungseinrichtung | 57 | Pfeil |
| 27 | Produkt | 58 | Fülleinheit |
| 28 | Drehrichtung | 59 | vorbestimmte Höhe |
| 29 | Einlauftrichter | 60 | Füllvorgang |
| 30 | Gestell | 61 | Förderintervall |
| 31 | Träger | | |

## Patentansprüche

1. Packmaschine (1 ) zum Füllen von Säcken (2) mit einer Tragkonstruktion (15), an der wenigstens ein Fülltopf (3) befestigt ist, der wenigstens ein Förderorgan (24) umfasst und dem eine Wägeeinrichtung (25) und ein Füllstutzen (4) zugeordnet sind, wobei wenigstens eine Steuereinrichtung (7) vorgesehen ist,
wobei der Fülltopf (3) von der Tragkonstruktion (15) und dem zugeordneten Füllstutzen (4) entkoppelt gehalten und von der zugeordneten Wägeeinrichtung (25) separat gewogen wird, um durch einen Differentialwiegevorgang eine vordefinierte Menge eines abzufüllenden Produktes (27) aus dem Fülltopf abzuleiten und durch den Füllstutzen (4) in den Sack (2) einzufüllen
**dadurch gekennzeichnet,**
**dass** die Steuereinrichtung (7) und das Förderorgan (24) eine Volumenstromsteuereinrichtung zur Steuerung des Volumenstroms bilden und dass die Steuereinrichtung (7) dazu ausgebildet ist, eine Stärke eines Volumenstroms (47) in den Sack (2) über dem Füllvorgang zeitlich zu steuern, sodass ein Füllstand (52) des abzufüllenden Produkts (27) während des Füllvorgangs hochgehalten wird, während gleichzeitig ein Überlauf vermieden wird.

2. Packmaschine (1 ) nach Anspruch 1, wobei die Steuereinrichtung eingerichtet und dazu ausgebildet ist, während eines Füllvorgangs die Fördergeschwindigkeit mehrmals zu vergrößern und wieder zu verkleinern.

3. Packmaschine (1) nach einem der vorhergehenden Ansprüche, wobei während eines Füllvorgang abwechselnd mehrere Förderintervalle mit größerer und kleinerer Füllgeschwindigkeit vorgesehen sind.

4. Packmaschine (1) nach einem der vorhergehenden Ansprüche, wobei wenigstens eine Verdichtungseinrichtung (19) wenigstens einem Füllstutzen (4) zugeordnet ist, welche insbesondere während des Füllvorgangs betrieben wird.

5. Packmaschine (1) nach dem vorhergehenden Anspruch, wobei wenigstens eine Verdichtungseinrichtung (19) einen Bodenrüttler (55), eine Rüttelflasche (43) und/oder eine Vakuumlanze (56) umfasst.

6. Packmaschine (1) nach einem der vorhergehenden Ansprüche, wobei das Förderorgan (24) eine Füllturbine (46) umfasst, dessen Fördergeschwindigkeit variabel steuerbar ist.

7. Packmaschine (1) nach einem der vorhergehenden Ansprüche, wobei dem Förderorgan (24) eine Absperreinrichtung (50) zugeordnet ist, welche insbesondere einen Sperrschieber oder ein Quetschventil umfasst.

8. Packmaschine (1) nach einem der vorhergehenden Ansprüche, wobei wenigstens ein Sensor (51) zur Erfassung eines Füllstands (52) vorgesehen ist.

9. Packmaschine (1) nach einem der vorhergehenden Ansprüche, wobei der dem Fülltopf (3) zugeordnete Füllstutzen (4) an der Tragkonstruktion (15) befestigt und elastisch mit dem Fülltopf (3) verbunden ist und wobei dem Silo (32) wenigstens ein steuerbares Dosier- und/oder Verschlussorgan (38) zugeordnet ist.

10. Packmaschine (1) nach einem der vorhergehenden Ansprüche, wobei eine Mehrzahl an Fülltöpfen (3) vorgesehen ist und/oder wobei die Tragkonstruktion (15) um eine zentrale Achse (37) drehbar angeordnet ist und im Betrieb rotiert und wobei das Silo (32) insbesondere mitrotierend ausgebildet ist.

11. Verfahren zum Füllen von Säcken (2) mit einer Packmaschine (1), bei der an einer Tragkonstruktion (15) wenigstens ein Fülltopf (3) befestigt ist, der ein Förderorgan (24) umfasst und dem eine Wägeeinrichtung (25) und ein Füllstutzen (4) zugeordnet sind, wobei der Fülltopf (3) von der Tragkonstruktion (15) und dem zugeordneten Füllstutzen (4) entkoppelt gehalten und von der zugeordneten Wägeeinrichtung (25) separat gewogen wird, um mittels eines Differentialwiegevorgangs über eine Steuereinrichtung (7) gesteuert eine vordefinierte Menge eines abzufüllenden Produktes (27) aus dem Fülltopf abzuleiten und durch den Füllstutzen (4) in den Sack (2) einzufüllen,
**dadurch gekennzeichnet,**
**dass** die Steuereinrichtung (7) und das Förderorgan (24) eine Volumenstromsteuereinrichtung zur Steuerung des Volumenstroms bilden und dass während des Füllvorgangs eine Stärke des Volumenstroms (47) in Abhängigkeit von der Füllzeit mit der Steuereinrichtung (7) zeitlich gesteuert wird, sodass ein Füllstand (52) des abzufüllenden Produkts (27) während des Füllvorgangs hochgehalten wird, während gleichzeitig ein Überlauf vermieden wird.

12. Verfahren nach dem vorhergehenden Anspruch, wobei ein Füllstand während des Füllvorgangs erfasst und der Volumenstrom in Abhängigkeit von dem Füllstand gesteuert wird.

13. Verfahren nach einem der beiden vorhergehenden Ansprüche, wobei während eines Füllvorgangs die Fördergeschwindigkeit mehrmals vergrößert und wieder verkleinert wird.

## Claims

1. Packaging machine (1) for filling bags (2) having a supporting structure (15) to which at least one filling box (3) is fastened which comprises at least one conveyor element (24) and to which a weighing device (25) and a filling spout (4) are assigned, wherein at least one control device (7) is provided,
wherein the filling box (3) is retained decoupled from the supporting structure (15) and the assigned filling spout (4) and is weighed separately by the assigned weighing device (25) so as to discharge from the filling box a predefined quantity of intended fill product (27) by way of differential weighing and to fill it through the filling spout (4) into the bag (2), **characterized in that** the control device (7) and the conveyor element (24) form a volume flow control device for controlling the volume flow, and that the control device (7) is configured for controlling the strength of the volume flow (47) into the bag (2) over the time of the filling process so that the intended fill product (27) is maintained at a high fill height (52) during the filling process while overflow is simultaneously prevented.

2. The packaging machine (1) according to claim 1 wherein the control device is adapted and configured to increase and decrease the conveying speed several times during a filling process.

3. The packaging machine (1) according to any of the preceding claims wherein during a filling process several conveying cycles alternating between higher and lower filling rates are provided.

4. The packaging machine (1) according to any of the preceding claims wherein at least one compactor (19) is.assigned to at least one filling spout (4) operated in particular during the filling process.

5. The packaging machine (1) according to the preceding claim wherein at least one compactor (19) comprises a bottom vibrator (55), a poker vibrator (43) and/or a vacuum lance (56).

6. The packaging machine (1) according to any of the preceding claims wherein the conveyor element (24) comprises a filling turbine (46) the conveying speed of which can be controlled variably.

7. The packaging machine (1) according to any of the preceding claims wherein the conveyor element (24) has a stopping device (50) assigned to it which comprises in particular a lock valve or a squeeze valve.

8. The packaging machine (1) according to any of the preceding claims wherein at least one sensor (51) for capturing a fill height (52) is provided.

9. The packaging machine (1) according to any of the preceding claims wherein the filling spout (4) assigned to the filling box (3) is fastened to the supporting structure (15) and is elastically connected with the filling box (3) and wherein the silo (32) has at least one controllable dosing element and/or closing head (38) assigned to it.

10. The packaging machine (1) according to any of the preceding claims wherein a plurality of filling boxes (3) is provided and/or wherein the supporting structure (15) is disposed to rotate about a central axis (37) and rotates in operation and wherein the silo (32) is in particular configured to rotate along.

11. Method for filling bags (2) by means of a packaging machine (1) where a supporting structure (15) has at least one filling box (3) fastened to it which comprises a conveyor element (24) and to which a weighing device (25) and a filling spout (4) are assigned,
wherein the filling box (3) is retained decoupled from the supporting structure (15) and the assigned filling spout (4) and is weighed separately by the assigned weighing device (25) so as to discharge from the filling box a predefined quantity of intended fill product (27) by way of differential weighing, controlled by a control device (7), and to fill it through the filling spout (4) into the bag (2),
**characterized in that** the control device (7) and the conveyor element (24) form a volume flow control device for controlling the volume flow, and that during the filling process a strength of the volume flow (47) is timed by means of the control device (7) in dependence on the filling duration so that a fill height (52) of the intended fill product (27) is maintained high during the filling process while overflow is simultaneously prevented.

12. The method according to the preceding claim wherein a fill height is captured during the filling process and the volume flow is controlled in dependence on the fill height.

13. The method according to any of the two preceding claims wherein during a filling process the conveying speed is increased and decreased several times.

## Revendications

1. Ensacheuse (1) pour remplir des sacs (2), dotée d'une construction support (15) à laquelle est fixé au moins un réservoir (3) comprenant au moins un organe de convoyage (24) et auquel sont associés un dispositif de pesée (25) et un bec de remplissage (4), au moins un dispositif de commande (7) étant prévu,
le réservoir (3) étant tenu indépendant de la construction support (15) et du bec de remplissage (4) associé, et étant pesé séparément par le dispositif de pesée (25) associé pour prélever du réservoir, par un processus de pesage différentiel, une quantité prédéterminée d'un produit à remplir (27) et pour la verser dans le sac (2) par le bec de remplissage (4),
**caractérisée en ce**
**que** le dispositif de commande (7) et l'organe de convoyage (24) constituent un dispositif de commande de débit volumique destiné à contrôler le débit volumique, et que le dispositif de commande (7) est conçu pour contrôler temporellement, par le processus de remplissage, une intensité d'un débit volumique (47) versé dans le sac (2), de telle sorte que le produit à remplir (27) est maintenu à un niveau de remplissage (52) au cours du processus de remplissage, tandis qu'on évite en même temps un débordement.

2. Ensacheuse (1) selon la revendication 1, le dispositif de commande étant installé et conçu pour, au cours d'un processus de remplissage, accélérer puis ralentir plusieurs fois la vitesse de convoyage.

3. Ensacheuse (1) selon l'une quelconque des revendications précédentes, plusieurs intervalles de convoyage étant prévus en alternance à une vitesse de convoyage plus rapide puis plus lente au cours d'un processus de remplissage.

4. Ensacheuse (1) selon l'une quelconque des revendications précédentes, au moins un dispositif compresseur (19), qui est actionné notamment au cours du processus de remplissage, étant associé à au moins un bec de remplissage (4).

5. Ensacheuse (1) selon la revendication précédente, au moins un dispositif compresseur (19) comprenant un vibrateur par le fond (55), une machine à vibration (43) et/ou une lance à vide (56).

6. Ensacheuse (1) selon l'une quelconque des revendications précédentes, l'organe de convoyage (24) comprenant une turbine de remplissage (46) dont la vitesse de convoyage est variable sur commande.

7. Ensacheuse (1) selon l'une quelconque des revendications précédentes, un dispositif d'arrêt (50), qui comprend notamment un registre d'arrêt ou une vanne à manchon, étant associé à l'organe de convoyage (24).

8. Ensacheuse (1) selon l'une quelconque des revendications précédentes, au moins un capteur (51) étant prévu pour détecter un niveau de remplissage (52).

9. Ensacheuse (1) selon l'une quelconque des revendications précédentes, le bec de remplissage (4) associé au réservoir (3) étant fixé à la construction support (15) et relié de manière élastique au réservoir (3), et au moins un organe de dosage et/ou de fermeture (38) commandable étant associé au silo (32).

10. Ensacheuse (1) selon l'une quelconque des revendications précédentes, une pluralité de réservoirs (3) étant prévue et/ou la construction support (15) étant agencée rotative autour d'un axe central (37) et étant en rotation en mode de fonctionnement, et le silo (32) étant disposé notamment de telle sorte à tourner en même temps.

11. Procédé (1) pour remplir des sacs (2) au moyen d'une ensacheuse (1), au moins un réservoir (3), qui comprend un organe de convoyage (24) et auquel sont associés un dispositif de pesée (25) et un bec de remplissage (4), étant fixé à une construction support (15), le réservoir (3) étant tenu indépendant de la construction support (15) et du bec de remplissage (4) associé, et étant pesé séparément par le dispositif de pesée (25) associé pour prélever du réservoir, au moyen d'un processus de pesage différentiel et commandé par le biais d'un dispositif de commande (7), une quantité prédéterminée d'un produit à remplir (27) et pour la verser dans le sac (2) par le bec de remplissage (4), **caractérisé en ce**
**que** le dispositif de commande (7) et l'organe de convoyage (24) constituent un dispositif de commande de débit volumique destiné à contrôler le débit volumique, et qu'une intensité du débit volumique (47) est commandée temporellement par le dispositif de commande (7), en fonction de la durée de remplissage, de telle sorte que le produit à remplir (27) est maintenu à un niveau de remplissage (52) au cours du processus de remplissage, tandis qu'on évite en même temps un débordement.

12. Procédé selon la revendication précédente, un niveau de remplissage étant détecté pendant le processus de remplissage et le débit volumique étant commandé en fonction du niveau de remplissage.

13. Procédé selon l'une quelconque des deux revendications précédentes, la vitesse de convoyage étant plusieurs fois accélérée puis à nouveau ralentie au cours d'un processus de remplissage.
